(19) **Europäisches Patentamt**

**European Patent Office**

**Office européen des brevets**

(11) **EP 0 923 984 B1**

(12) **EUROPEAN PATENT SPECIFICATION**

(45) Date of publication and mention
of the grant of the patent:
**24.08.2005 Bulletin 2005/34**

(51) Int Cl.⁷: **B01D 71/42**, D01F 6/54,
B01D 67/00

(21) Application number: **98928581.2**

(22) Date of filing: **19.06.1998**

(86) International application number:
**PCT/JP1998/002736**

(87) International publication number:
**WO 1998/058728 (30.12.1998 Gazette 1998/52)**

(54) **POLYACRYLONITRILE-BASED HOLLOW-FIBER FILTRATION MEMBRANE**

HOHLFASER-FILTRATIONSMEMBRAN AUF POLYACRYLNITRILBASIS

MEMBRANE FILTRANTE DE FIBRES CREUSES A BASE DE POLYACRYLONITRILE

(84) Designated Contracting States:
**DE FR GB NL**

(30) Priority: **20.06.1997 JP 16465397**
**28.10.1997 JP 29509397**

(43) Date of publication of application:
**23.06.1999 Bulletin 1999/25**

(73) Proprietor: **Asahi Kasei Kabushiki Kaisha**
**Osaka 530-8205 (JP)**

(72) Inventors:
• **OISHI, Teruhiko**
**Oaza Kubaru, Oita-shi Oita-ken (JP)**
• **KUBOTA, Noboru**
**Fuji-shi, Shizuok a416-0949 (JP)**

(74) Representative: **Strehl Schübel-Hopf & Partner**
**Maximilianstrasse 54**
**80538 München (DE)**

(56) References cited:
EP-A- 0 636 404      EP-A- 0 913 186
DE-C- 19 518 624     JP-A- 5 184 891
JP-A- 7 100 343      JP-A- 53 041 385
JP-A- 58 094 862     JP-A- 59 132 904
US-A- 4 968 733

• PATENT ABSTRACTS OF JAPAN vol. 003, no. 158 (M-086), 25 December 1979 (1979-12-25) & JP 54 134879 A (ASAHI CHEM IND CO LTD), 19 October 1979 (1979-10-19) -& DATABASE WPI Section Ch, Week 198738 Derwent Publications Ltd., London, GB; Class J01, AN 1987-269120 XP002299132 -& JP 54 134879 A (ASAHI CHEM IND CO LTD) 19 October 1979 (1979-10-19)
• PATENT ABSTRACTS OF JAPAN vol. 003, no. 037 (C-041), 29 March 1979 (1979-03-29) & JP 54 010282 A (MITSUBISHI RAYON CO LTD), 25 January 1979 (1979-01-25) -& DATABASE WPI Section Ch, Week 197909 Derwent Publications Ltd., London, GB; Class A14, AN 1979-17168B XP002299133 -& JP 54 010282 A (MITSUBISHI RAYON CO LTD) 25 January 1979 (1979-01-25) & JP 60 039404 B 5 September 1985 (1985-09-05)

# EP 0 923 984 B1

**Description**

TECHNICAL FIELD

The present invention relates to a high performance polyacrylonitrile-based hollow fiber filtration membrane having high strength, elongation, and water permeability as well as distinguished chemical resistance and filtration reliability.

BACKGROUND ART

Recent progress of technology has been made using membranes having permselectivity in separation operations and this technology is now practically utilized in the fields of the food industry, pharmaceutical industry, electronic industry, medical treatment, treatment of drinking water and condensation treatment of the nuclear power plants, cooling water, etc. For membrane materials, cellulose-based resin, polyamide-based resin, polyacrylonitrile-based resin, polycarbonate-based resin, polysulfone-based resin, etc. are now available, and above all the polyacrylonitrile-based resin has good mechanical characteristics as well as distinguished membrane hydrophilicity and water permeability. Thus, the polyacrylonitrile-based membrane has been developed with emphasis on separability properties, water permeability or mechanical strength, and various membrane structures and chemical compositions have been proposed according to the desired purposes.

For example, JP-B-60-39404 discloses a membrane structure comprising a dense layer only on the outer surface of the membrane, a layer of net structure on the inner side of the dense layer and a layer having macrovoids open to the inner surface on the inner side of the layer of net structure. The membrane of such a structure has distinguished selectivity, but owing to its low water permeability much more membrane modules are required for applications relating to purification of a large amount of water such as water supply, etc., resulting in use of apparatuses of larger size and increases in the treatment cost.

On the other hand, JP-A-63-190012 discloses a membrane of polyacrylonitrile with an ultra-high degree of polymerization in a macrovoid-free structure comprising a dense layer only on the outer surface of the membrane. The membrane has a distinguished mechanical strength, but its water permeability is not satisfactory.

JP-A-6-65809 likewise discloses a membrane of polyacrylonitrile with an ultra-high degree of polymerization in a structure comprising a dense layer only on the outer surface and a layer having macrovoids on the dense layer. The dense layer of the membrane has a larger pore size and the membrane has a poor balance between water permeability and the selectivity.

The membrane comprising a dense layer only on the outer surface may suffer from permeation of matter properly blocked by the membrane when the dense layer on the outer surface is damaged for any reason. Such a membrane lacks filtration reliability.

The conventional polyacrylonitrile-based filtration membrane has a poor chemical resistance, as compared with, for example, a polysulfone-based filtration membrane, etc. and thus is not applicable to the field requiring cleaning with a highly concentrated chemical. That is, its use is limited.

Changes in the physical properties of polyacrylonitrile-based filtration membrane in a chemical solution have been so far thought as an inevitable phenomenon due to the material characteristics proper to polyacrylonitrile-based polymers, and thus it has been so far regarded as impossible by nature to improve the chemical resistance of polyacrylonitrile-based filtration membrane.

The DE-C-19518624 describes a three-layered polyacrylonitrile membrane wherein the outer layers have a smaller pore size.

The document WO-A-9834719 (or EP-A-0913186), published 13.08.1998, filing date 07.02.1997 describes polyacrylonitrile membranes wherein the pore size increases in a continuous manner from the inner wall surface toward the interior of the membrane while decreasing in a continuous manner from the interior of the membrane toward the outer wall surface, at least one maximum size area being present in the interior of the membrane.

DISCLOSURE OF THE INVENTION

The present inventors have invented a polyacrylonitrile-based membrane having high water permeability, strength and elongation by providing an acrylonitrile-based polymer membrane having a membrane structure as not disclosed in the prior art, e.g. by making the structure free from internal macropores, and providing a compact layer on both surfaces of the membrane, while differentiating the pore size on one surface from another.

An object of the present invention is to provide a high performance polyacrylonitrile-based hollow fiber filtration membrane having high strength, elongation and water permeability as well as distinguished chemical resistance and filtration reliability.

Another object of the present invention is to provide a process for producing the high performance polyacrylonitrile-based hollow fiber filtration membrane.

The present polyacrylonitrile-based hollow fiber filtration membrane is characterized by a sponge structure free from polymer defect sites (macropores or voids) of sizes larger than 10 μm inside the membrane, the pore sizes continuously decreasing in a direction towards both surfaces of the membrane and the pore size on the outer surface of the membrane being differentiated from that on the inner surface. The present process for producing the polyacrylonitrile-based hollow fiber filtration membrane comprises discharging a membrane-forming solution comprising an acrylonitrile-based polymer, a solvent mixture of propylene carbonate and dimethylsulfoxide and an additive through a coaxial tube spinneret together with a bore solution capable of inducing phase separation of the membrane-forming solution and having a viscosity of 25 cp (centipoises) at 20°C, followed by passing this solution through an air gap and coagulation of the membrane in a coagulation bath.

BRIEF DESCRIPTION OF THE DRAWINGS

Fig. 1 is an electron micrograph (magnification : x 400) showing the vertical cross-section (partial) of one embodiment of the present hollow fiber filtration membrane.

Fig. 2 is another electron micrograph (magnification: x 3,000) of a cross-section near the outer surface of the hollow fiber filtration membrane, as shown in Fig. 1.

Fig. 3 is other electron micrograph (magnification: x 3,000) of a cross-section near the inner surface of the hollow fiber filtration membrane, as shown in Fig. 1.

Fig. 4 is a further electron micrograph (magnification: x 10,000) of the inner surface of the hollow fiber filtration membrane, as shown in Fig. 1.

Fig. 5 is a still further electron micrograph (magnification: x 10,000) of the outer surface of the hollow fiber filtration membrane, as shown in Fig. 1.

Fig. 6 is a cross-section of a hollow fiber membrane, positioned in a vessel for measuring a fluid linear velocity.

BEST MODE FOR CARRYING OUT THE INVENTION

The structure of the present hollow fiber filtration membrane (which will be hereinafter also referred to merely a "membrane") will be described below:

The present polyacrylonitrile-based membrane is in an integrally continuous structure extending from one surface of the membrane to another, e.g. from the inner surface to the outer surface. The zone between one surface of the membrane and another surface, i.e. the membrane interior, is a net structure having mesh sizes (pore sizes) of not more than 10 μm and being free from defect sites (macropores or voids) of larger sizes than 10 μm. This structure will be referred to as a "sponge structure" in the present invention.

Pores in the net structure in the membrane interior have an inclined structure in the vertical cross-section in the longitudinal direction of the membrane, where the pore sizes are continuously decreased towards both surfaces of the membrane. This is similar to several cylindrical faces each having a concentric center axis extending in the longitudinal direction of the hollow fiber filtration membrane. Average pore sizes of pores on the respective faces are continuously decreased towards the surfaces throughout the membrane interior. Furthermore, the pore sizes on the outer surface of the present membrane are differentiated from those on the inner surface thereof.

A typical example of the present membrane will be described in detail below, referring to the drawings.

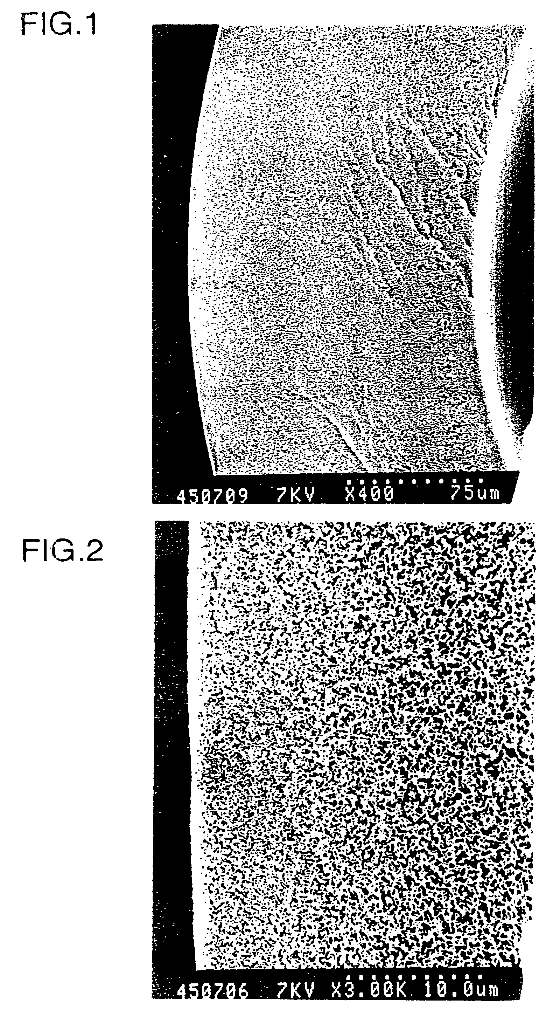

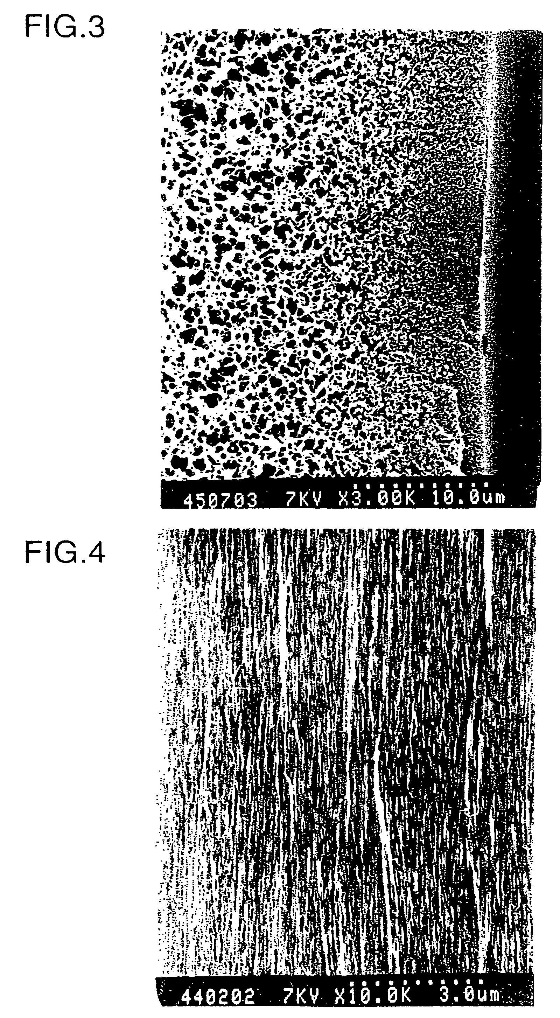

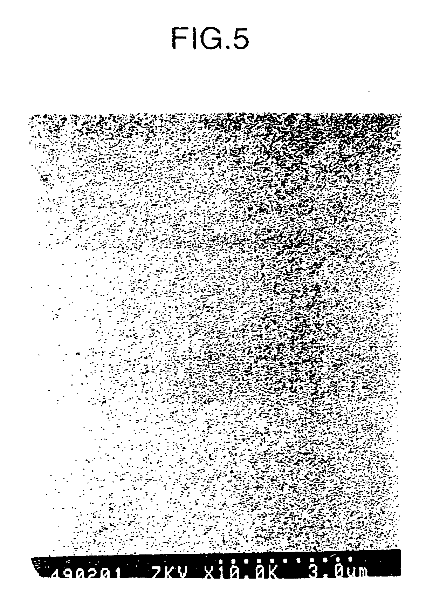

Fig. 1 is an electron micrograph of the vertical cross-section (partial) to the longitudinal direction of a hollow fiber filtration membrane, Fig. 2 is an enlarged micrograph of the cross-section near the outer surface of the hollow fiber filtration membrane of Fig. 1, and Fig. 3 is an enlarged micrograph of the cross-section near the inner surface of the hollow fiber filtration membrane of Fig. 1. Furthermore, Fig. 4 is an electron micrograph showing the state on the inner surface of the membrane and Fig. 5 is another electron micrograph showing the state on the outer surface of the membrane.

As shown in Figs. 1 to 3, the membrane has an inclined structure where the average pore size is gradually and continuously decreased from the center of the membrane thickness towards the outer surface or the inner surface of the membrane, i.e. has a net structure having an anisotropy with respect to the pore sizes. The membrane surfaces are in a dense structure, but the present membrane appears not to have such a distinct skin layer as known so far. Fig. 5 shows the state of dense outer surface, whereas a pattern of numerous slit-shaped stripes or slit-shaped pores are observed in the longitudinal direction of the membrane on the inner surface, as evident from Fig. 4.

Pores open to the surfaces of the membrane are preferably in a circular, ellipsoidal, net or slit-like shape, and pores open to the outer surface is more preferably in a circular, ellipsoidal or net shape. Pores open to the surfaces of the membrane have an average pore size of not more than 1 μm, preferably 0.01 μm to 0.5 μm, more preferably 0.01 μm to 0.3 μm. Pores larger than 1 μm have a lower effect on removal of fine particles as a tendency. To obtain a high water permeability, it is preferable that the average pore size on at least one surface of the membrane is not less than 0.01 μm. Shapes and sizes of pores open to the surfaces of the membrane can be observed and determined by electron microscope.

Average pore size $\bar{D}$ of pores open to the inner and outer surfaces is a value shown by the following equation:

$$\bar{D} = \sqrt{\frac{(Di^2)^2 + ... + (Dn^2)^2}{Di^2 + ... + Dn^2}} \qquad (1)$$

wherein $\bar{D}$: average pore size

    Di : measured pore size of ith pore

    Dn : measured pore size of nth pore

Measured pore size Di and Dn show pore diameters, when the pores are approximate to circular shapes, or show diameters of circles having the same area as those of the pores, when the pores are not in a circular shape.

To improve the water permeability of the membrane, it is preferable that the pores are made open to both inner and outer surfaces of the membrane, where the sizes of pores to be made open can be selected by desired requirements (use), but the sizes of pores to be made open on at least one surface of the membrane (pore sizes) must be sizes for assuring the filtration reliability of the membrane, that is, smaller pore sizes than sizes of matters to be blocked by filtration. Furthermore, to improve the water permeability of the membrane, it is necessary that pore sizes on at least one surface of the membrane are larger than those on another surface. Membranes for water treatment have a larger average pore size on the inner surface than that on the outer surface, because raw water to be filtered is more often charged from the outer surface side.

The present membrane has a structure as mentioned above, and thus even if outer dense surface sites are damaged, matter to be removed can be blocked by other inner dense surface sites. That is, the present membrane has high filtration reliability and water permeability.

Furthermore, the present membrane has surprisingly a high chemical resistance equivalent to that of a polysulfone-based hollow fiber filtration membrane.

The present polyacrylonitrile-based hollow fiber filtration membrane has percent changes of less than 20% in breaking strength and breaking elongation of the hollow fiber membrane before and after dipping into an aqueous hypochlorite solution having an available chlorine concentration of 1,200 ppm and containing 0.1 N (normal) alkali at 25°C for 120 hours.

In the present invention, percent changes in breaking strength and breaking elongation are values calculated by the following equations, respectively:

Percent change (%) in breaking strength = (Sb/Sa)/Sb x 100

wherein Sb: Breaking strength before dipping into the aqueous hypochlorite solution

    Sa: Breaking strength after dipping into the aqueous hypochlorite solution.

Percent change (%) in breaking elongation =

(Eb-Ea)/Eb x 100

wherein Eb: Breaking elongation before dipping into the aqueous hypochlorite solution

    Ea: Breaking elongation after dipping into the aqueous hypochlorite solution.

Breaking strength and breaking elongation of a membrane can be measured by testing a thoroughly water-impregnated hollow fiber membrane having a sample length of 50 mm at 25°C and a tensile speed of 10 mm/min by means of a tensil tester.

Breaking strength can be represented by the load (kgf) at breaking per hollow fiber membrane and breaking elongation (stretching) can be represented by the ratio of the elongated length at breaking to the original length (%).

The aqueous hypochlorite solution referred to in the present invention includes aqueous solutions of hypochlorous acid, sodium hypochlorite, potassium hypochlorite, calcium hypochlorite, etc., which are cleaning solutions to be used for recovery of the membrane properties.

For cleaning attached organic substance, the aqueous hypochlorite solution is preferably applied to membranes of any material in general. To improve the cleaning effect on organic substance attached to the membrane, it is preferable to add an alkali to the aqueous hypochlorite solution. However, though the cleaning effect can be increased when changing from the aqueous hypochlorite solution to the aqueous alkali-added hypochlorite solution, degradation of membranes composed of organic materials will also be larger as a tendency. Concentration of the alkali in the aqueous hypochlorite solution, when used as a cleaning agent, is not more than 5 N (normal), preferably not more than 1 N (normal), more preferably 0.01 N (normal) to 0.1 N (normal). When the concentration of an alkali exceeds 5 N (normal), degradation of polyacrylonitrile-based membrane will be larger as a tendency.

Generally, resistance of polyacrylonitrile-based membrane to a hypochlorite is low. For example, in the case of dipping the membrane into an aqueous sodium hypochlorite solution having an available chlorine concentration of 200 ppm and containing 0.1 N (normal) sodium hydroxide at room temperature around 25°C for 5 days, the percent change in breaking elongation is 70% or more, and the breaking elongation is sometimes largely lowered. Thus, in the case of cleaning the polyacrylonitrile-based membrane with an aqueous hypochlorite solution, it has been so far necessary to use the aqueous hypochlorite solution at an available chlorine concentration of less than 200 ppm to avoid the degradation of the membrane. In case of the present hollow fiber filtration membrane, on the other hand, percent changes in breaking strength and breaking elongation are less than 20%, mostly not more than 5%, even if the available chlorine concentration of an aqueous hypochlorite solution to be used is made as high as 1,200 ppm.

Other chemical solutions for use to recover the membrane performance include, for example, aqueous solutions of an acid such as hydrochloric acid, sulfuric acid, phosphoric acid, nitric acid, acetic acid, citric acid, etc., aqueous solutions of an alkali such as sodium hydroxide, potassium hydroxide, calcium hydroxide, lithium hydroxides, strontium hydroxide, etc., and an aqueous hydrogen peroxide solution, etc. Even with these chemical solutions, the present membrane has percent changes in breaking strength and breaking elongation of less than 20%, mostly not more than 5%, under such conditions as the concentration: 1,200 ppm, solution temperature: 25°C and dipping time: 120 hours. The foregoing conditions and results are one example showing that the present membrane has a good chemical resistance, and in actual practice the dipping time in the chemical solution, concentration and temperature of the aqueous oxidant solution or bath ratio of the membrane to the aqueous oxidant solution are not limited thereto.

The present process for producing the polyacrylonitrile-based hollow fiber filtration membrane will be described below, referring to a typical example.

The present membrane can be produced by discharging a membrane-forming solution substantially comprising an acrylonitrile-based polymer, a solvent mixture of propylene carbonate and other organic solvent and a specific additive through a well known coaxial tube spinneret of a tube-in-orifice type together with an internal solution, followed by passing the solutions through an air gap and coagulation in a coagulation bath.

Membrane-forming solution can be prepared by placing the solvent mixture, the additive and the acrylonitrile-based polymer into a temperature-controllable vessel, followed by dissolution by a stirrer or a mixer such as Henschel mixer, etc.

Acrylonitrile-based polymer for use in the present invention is an acrylonitrile homopolymer or an acrylonitrile-based copolymer, which comprises at least 70% by weight, preferably 85 to 100% by weight, of acrylonitrile and not more than 30% by weight, preferably 0 to not more than 15% by weight, of at least one vinyl compound copolymerizable with the acrylonitrile (the homopolymer and the copolymer will be hereinafter referred to as "acrylonitrile-based polymer" together). The acrylonitrile-based polymer has an intrinsic viscosity of preferably not less than 0.4 to less than 2.0. At an intrinsic viscosity of less than 0.4, the membrane will have a lower strength, whereas at an intrinsic viscosity of not less than 2.0, the solubility will be poor.

The vinyl compounds are not particularly limited and, any well known compounds can be used so long as they are copolymerizable with acrylonitrile. Preferable comonomer components include, for example, acrylic acid, methyl acrylate, ethyl acrylate, methacrylic acid, methyl methacrylate, ethyl methacrylate, itaconic acid, vinyl acetate, sodium acrylsulfonate, sodium methallylsulfonate, sodium p(para)-styrene-sulfonate, hydroxyethyl methacrylate, ethyl methacrylate triethylammonium chloride, ethyl methacrylate trimethylammonium chloride, vinylpyrrolidone, etc.

The solvent mixture comprising propylene carbonate and another organic solvent, which is important for obtaining the present membrane, is a mixture of propylene carbonate and at least one of acrylonitrile-based polymer-dissolvable organic solvents other than propylene carbonate. Acrylonitrile-based polymer-dissolvable organic solvents include, for example, N,N-dimethylformamide, N,N-dimethylacetamide, dimethyl sulfoxide, $\gamma$-butyrolactone, ethylene carbonate, N-methyl-2-pyrrolidone, 2-pyrrolidone, hexamethylene phosphamide, etc. To give high mechanical strength and elongation to the membrane, it is preferable to use a mixture of propylene carbonate and dimethyl sulfoxide. Without propylene carbonate, the present membrane is difficult to obtain. Concentration of propylene carbonate in the solvent mixture is not less than 2% by weight to not more than 99.9% by weight, preferably not less than 5% by weight to not more than 90% by weight, more preferably not less than 5% by weight to not more than 70% by weight. In a concentration lower than 2% by weight or a higher concentration than 99.9% by weight, the membrane having high mechanical strength and elongation and a distinguished water permeability is difficult to obtain as a tendency.

Concentration of the acrylonitrile-based polymer in the membrane-formable solution is not particularly limited, so long as it is in such a range as to form a film having desired properties as a membrane, and is usually 5 to 35% by weight, preferably 10 to 30% by weight. To attain a high water permeability and a large fractionable molecular weight, a lower concentration of acrylonitrile-based polymer is better, and 10 to 25% by weight is preferable.

The additive is not particularly limited, so long as it is compatible with the solvent and incapable of dissolving the acrylonitrile-based polymer. The additive may be to control the solution viscosity and the solution state. Water; salts; alcohols such as isopropyl alcohol, methanol, ethanol, propanol, butanol, etc.; ketones such as acetone, methyl ethyl ketone, etc.; glycols such as diethylene glycol, triethylene glycol, tetraethylene glycol, polyethylene glycol (weight average molecular weight: 200 to 35,000), etc.; glycerine; and polyvinylpyrrolidone (weight average molecular weight: 1,000 to 2, 800,000), etc; can be used as the additive. Two or more kinds of additives can be used, the kind and added amount of which can be properly chosen as needs arise. A preferable additive is polyethylene glycol, more preferably polyethylene glycol having a weight average molecular weight of not more than 1,000. By using polyethylene glycol having a weight average molecular weight of not more than 1,000, a membrane having a distinguished strength can be obtained.

Concentration of the additive in the solution is 1 to 40% by weight, preferably 1 to 30% by weight, though the optimum concentration depends upon kinds and molecular weight of additive to be used.

The membrane-forming solution is discharged through a coaxial tube spinneret together with a bore solution which is capable of inducing phase separation of the membrane-forming solution and has a viscosity of 15 cp (centipoises) or more at 20°C, followed by passing through an air gap and coagulation in a coagulation bath, thereby making a hollow fiber membrane. The process can produce a membrane having pores with distinguished water permeability and blockability.

The bore solution is to form the hollow region and the inner surface of the hollow fiber filtration membrane. In the present invention, a liquid capable of inducing phase separation of the membrane-forming solution and having a viscosity of 15 cp (centipoises) or more at 20°C is used as a bore solution to make pores with a distinguished water permeability open to the inner surface. The liquid includes, for example, ethylene glycol, propylene glycol, trimethylene glycol, 1,2-butylene glycol, 1,3-butylene glycol, 2-butyne-1,4-diol, 2-methyl-2,4-pentanediol, 2-ethyl-1,3-hexanediol, glycerine, tetraethylene glycol, polyethylene glycol 200, polyethylene glycol 300, polyethylene glycol 400, etc. Glycols or glycerols having a molecular weight of not more than 1,000 are preferable for use. With a liquid having a viscosity of less than 15 cp (centipoises) at 20°C, the thickness of an internal surface sites-forming layer will be increased and the water permeability will be decreased as a tendency.

Furthermore, the glycol or glycerol-based compound can be used as a mixed solution with water, an alcohol or a good solvent for the acrylonitrile-based polymer or as a mixed solution with water and a good solvent for the acrylonitrile-based polymer, so far as it is capable of inducing the phase separation and has a viscosity of 15 cp (centipoises) or more at 20°C. Good solvents for the acrylonitrile-based polymer include, for example, N,N-dimethylacetamide, dimethyl sulfoxide, γ-butyrolactone, ethylene carbonate, propylene carbonate, 2-pyrrolidone, N-methyl-2-pyrrolidone, hexamethylene phosphoramide, etc.

To make circular, ellipsoidal or reticular pores open to the inner surface, it is preferable to use a liquid having a viscosity of 50 cp (centipoises) or more at 20°C.

Methods for making pores open to the outer surface of a membrane, on the other hand, include, for example, a method of enclosing the air gap with a cylinder, etc., thereby keeping the temperature and humidity constant. If required, vapors of non-solvent for the acrylonitrile-based polymer used can be passed through the cylinder in the air gap at a constant flow rate. The term "air gap" herein used means a gap between the spinneret and the coagulation bath. Pore sizes on the outer surface of a membrane can be adjusted by changing the temperature and humidity in the air gap. The air gap has a length of not less than 1 mm, preferably, not less than 1 mm to not more than 1,000 mm, more preferably not less than 1 mm to not more than 200 mm.

For the coagulation bath, a liquid (non-solvent) capable of inducing phase separation of the membrane-forming stock solution, but incapable of dissolving the acrylonitrile-based polymer, such as, water; alcohols such as methanol, ethanol, etc.; ethers; and aliphatic hydrocarbons such as n-hexane, n-heptane, etc. can be used, but water is preferable from the viewpoint of safety. Furthermore, it is possible to control the coagulation rate by adding a good solvent for the acrylonitrile-based polymer to the coagulation bath.

The temperature of the coagulation bath is -30°C to 90°C, preferably 0°C to 90°C, more preferably 0°C to 80°C. At a coagulation bath temperature of higher than 90°C or lower than -30°C, the membrane surface state will be unstable in the coagulation bath.

The present invention will be described below, referring to Examples, but will not be limited thereto.

Measuring procedures are as follows:

Hollow fiber membranes used as samples were all those thoroughly impregnated with water.

Water permeability of hollow fiber filtration membranes was determined by allowing ultrafiltration water at 25°C to permeate through a 50 mm-long sample of hollow fiber filtration membrane from the inner surface to the outer surface, calculating a water permeation rate per unit time, unit membrane area and unit pressure (unit intermembrane differential pressure) and expressing it in liters/hr/m$^2$/atm, where the available membrane area was based on the outer surface area.

Breaking strength and breaking elongation of membranes were determined by Autograph AGS-5D made by Shimadzu Corp. under such conditions as sample length:50 mm, tensile speed: 10 mm/min, and temperature: 25°C.

Breaking strength is expressed by a load (kgf) per hollow fiber membrane at breaking and breaking elongation by a ratio of elongated length at breaking to original length (%).

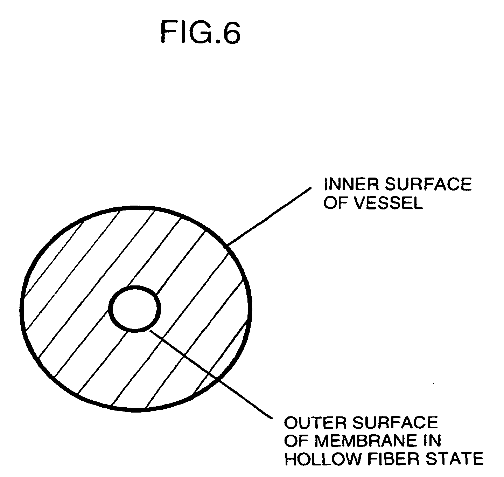

Selectivity (A) shows a blocking rate, when an aqueous phosphate buffer solution (concentration: 0.15 moles/ $\ell$ and pH: 7.4) containing 0.025% by weight of bovine serum albumin (molecular weight: 67,000, made by SIGMA) was filtered through a 70 mm-long hollow fiber filtration membrane from the outer surface to the inner surface of the membrane for 40 minutes under such crossflow conditions as an average pressure between the inlet pressure and the outlet pressure of 0.5 kgf/cm$^2$ and a fluid linear velocity of 1 m/sec. The fluid linear velocity was calculated from an area obtained by subtracting a cross-sectional area, which was calculated from the outer diameter of a hollow fiber filtration membrane, from the cross-sectional area of a cylindrical vessel (see Fig. 6). Concentration was measured by an ultraviolet spectrophotometer at a wavelength of 280 nm.

Selectivity (B) was determined in the same manner as the selectivity (A) except that the aqueous solution to be filtered was changed to an aqueous 0.1 wt.% solution of dextran having an average molecular weight of 2,000,000 (Dextran T-2000 made by Pharmacia Biotech). Concentration was measured by a refractometer at 25°C.

Chemical resistance was shown by percent changes in breaking elongation and breaking strength when dipping a hollow fiber filtration membrane at 25°C for 120 hours into an aqueous solution prepared by mixing pure water with sodium hypochlorite so as to make an available chlorine concentration of 1,200 ppm and with sodium hydroxide so as to made 4,000 ppm (0.1 N (normal)). Bath ratio (dipping volume ratio) of membrane to chemical solution was 1 to 100. Chemical solution was renewed at every 24 hours.

Intrinsic viscosity of acrylonitrile-based polymer was determined according to the procedure disclosed in Journal of Polymer Science, A-1, Vol. 6, 147-157 (1968), using N,N-dimethylformamide at 30°C.

Example 1 (Present Invention)

18.5% by weight of a copolymer having an intrinsic viscosity [y] = 1.2, consisting of 91.5% by weight of acrylonitrile, 8.0% by weight of methyl acrylate and 0.5% by weight of sodium methallylsulfonate, and 21.0% by weight of polyethylene glycol having a weight average molecular weight of 600 (PEG 600 made by Wako Pure Chemical Co., Ltd.) were dissolved into a solvent mixture consisting of 9.15% by weight of propylene carbonate and 51.85% by weight of dimethyl sulfoxide to made a homogeneous solution. Water content of the solution was measured by a Karl Fischer water analyzer and found to be not more than 600 ppm. The solution was kept at 60°C and discharged through a spinneret (coaxial tube spinneret: 0.5 mm - 0.7 mm - 1.3 mm) together with a bore solution, which was a mixed solution (viscosity at 20°C : 24 cp) consisting of 50% by weight of tetraethylene glycol and 50% by weight of water, passed through a 20 mm-long air gap and then through a coagulation bath having a total length of 5 m consisting of water at 43°C to obtain a hollow fiber filtration membrane, where the passage from the spinneret to the coagulation bath was enclosed by a cylinder and the relative humidity in the air gap zone within the cylinder was controlled to 100%. The spinning speed was set to 10 m/min. The resulting hollow fiber filtration membrane was dipped into pure water at 25°C for one day to fully remove the residual solvents from the membrane. The residual amount of polyethylene glycol, propylene carbonate and dimethyl sulfoxide in the wet membrane was not more than 1 ppm. Furthermore, the resulting hollow fiber filtration membrane was dipped into pure water at 20°C, heated at a heating rate of 15°C/hr and kept in water at the ultimate temperature of 55°C for 2 hours.

The resulting hollow fiber filtration membrane was observed by an electron microscope and found to be an inclined structure with continuously increasing pore size from both the inner and outer surfaces towards the center of the membrane as well as a sponge structure free from polymer defect sites having sizes larger than 10 μm. No pores larger than 0.02 μm were found on the outer surface of the membrane, whereas numerous slit-shaped stripes and slit-shaped pores were observed on the inner surface. Performance and structure of the membrane are shown in Table 1. When chemical resistance was determined by dipping the membrane into an aqueous sodium hydroxide-added sodium hypochlorite solution. Neither change nor decrease was observed in breaking strength and breaking elongation of the membrane. The results are shown in Table 1. Neither change nor decrease was also observed in water permeability or selectivity.

Example 2 (Comparative)

A membrane (inner diameter/outer diameter = 760/1,350 (μm)) was obtained according to Example 1 of JP-B-52-15072, using the same acrylonitrile-based polymer and spinneret as used in Example 1.

Observation of the resulting hollow fiber filtration membrane by an electron microscope revealed that there were a plurality of polymer defect sites (voids) having sizes of 15 μm to 80 μm on the cross-section of the membrane and numerous slit-shaped stripes and slit-shaped pores on the inner surface of the membrane, but there were no pores larger than 0.02 μm on the outer surface of the membrane. The properties, structure and chemical resistance results of the membrane are shown in Table 1.

Example 3 (Comparative)

A hollow fiber filtration membrane was obtained in the same manner as in Example 1, using the same composition ratio of the polymer, solvent and additive in the membrane-forming solution, except that the kind of the solvent was limited to dimethyl sulfoxide and the bore solution was changed to an aqueous 80 wt.% dimethyl sulfoxide solution. Observation of the resulting hollow fiber filtration membrane by an electron microscope revealed that it had such an inclined structure that pore sizes are continuously increased from the outer surface of the membrane towards the inner surface of the same and also a sponge structure containing no defect sites of sizes larger than 10 μm. No pores larger than 0.02 μm were observed on the outer surface of the membrane, whereas circular pores were observed on the inner surface. Properties of the resulting membrane are shown in Table 1.

Table 1

|  | Example 1 (Present invention) | Example 2 (Comparative) | Example 3 (Comparative) |
|---|---|---|---|
| Inner diameter (μm) | 760 | 760 | 760 |
| Outer diameter (μm) | 1340 | 1350 | 1350 |
| Presence of larger polymer defect sites than 10 μm | None | Yes | None |
| Average pore size on outer surface (μm) | 0.02 | 0.02 | 0.02 |
| Average pore size on inner surface (μm) | 0.08 | 0.02 | 5.0 |
| Water permeability ($\ell$/hr/ m$^2$/atm) | 350 | 110 | 350 |
| Selectivity (A) (%) | 92 | 98 | 90 |
| Selectivity (B) (%) | 96 | 96 | 90 |
| Breaking strength (kgf) | 0.54 | 0.45 | 0.35 |
| Breaking elongation (%) | 64 | 36 | 47 |
| Strength x elongation product (kgf·%) | 34.56 | 16.20 | 16.45 |
| Percent change in breaking elongation after dipping in chemical solution (%) | 0 | 75% lowered | 30% lowered |
| Percent change in breaking strength after dipping in chemical solution (%) | 0 | 4% lowered | 10% lowered |

INDUSTRIAL UTILITY

The present membrane has high mechanical strength, elongation and water permeability and also high chemical resistance and filtration reliability, and thus is suitable for use in the field of tap water purification such as decontamination of natural water, e.g. river water, lake water, underground water, sea water, etc., removal of microorganisms, preparation of germfree water, etc.; the field of coating material recovery from electrodeposition coating solutions; the field of ultrapure water production for the electronic industry; and the field of medicines, fermentation and food.

**Claims**

1. A polyacrylonitrile-based hollow fiber filtration membrane, wherein said membrane comprises a sponge structure free from polymer defect sites of sizes larger than 10 µm inside the membrane, pore sizes of said membrane continuously decrease towards both surfaces of the membrane, and the pore size on the outer surface of the membrane is different from that on the inner surface.

2. A polyacrylonitrile-based hollow fiber filtration membrane according to Claim 1, wherein the pores open to the surface of the membrane have an average pore size of not more than 1µm and the average pore size on at least one of the surfaces is not less than 0.01 µm.

3. A polyacrylonitrile-based hollow fiber filtration membrane according to Claim 1 or 2, wherein the average pore size on the inner surface of the membrane is larger than that on the outer surface.

4. A polyacrylonitrile-based hollow fiber filtration membrane according to any one of Claims 1 to 3, wherein the membrane comprises an acrylonitrile-based polymer having an intrinsic viscosity of not less than 0.4 to less than 2.0.

5. A polyacrylonitrile-based hollow fiber filtration membrane, wherein said membrane exhibits percent changes of less than 20% in breaking strength and breaking elongation of said membrane before and after dipping in an aqueous hypochlorite solution containing 0.1 N (normal) of an alkali(s) and having an available chlorine concentration of 1,200 ppm at a solution temperature of 25°C for 120 hours.

6. A process for producing a polyacrylonitrile-based hollow fiber filtration membrane, which comprises:

   discharging a membrane-forming solution comprising an acrylonitrile-based polymer, a solvent mixture of propylene carbonate and dimethyl sulfoxide, and an additive through a coaxial tube spinneret together with a bore solution which is capable of inducing phase separation of the membrane forming solution and has a viscosity of not less than 15 cp (centipoises) at 20°C;
   passing both solutions through an air gap; and
   then coagulating the membrane-forming solution in a coagulation bath.

7. A process according to Claim 6, wherein the concentration of propylene carbonate in the solvent mixture is not less than 2% by weight to not more than 99.9% by weight.

8. A process according to Claim 6 or 7, wherein the additive is polyethylene glycol having a molecular weight of not more than 1,000.

9. A process according to any one of Claims 6 to 8, wherein the bore solution is a solution containing a glycol or a glycerol having a molecular weight of not more than 1,000.

**Patentansprüche**

1. Hohlfaser-Filtrationsmembran auf Polyacrylnitrilbasis, wobei die Membran eine Schwammstruktur aufweist, die frei von Polymer-Fehlerstellen einer Größe von mehr als 10 µm im Innern der Membran ist, die Porengrößen der Membran sich in Richtung der beiden Oberflächen der Membran kontinuierlich vermindern und die Porengröße an der äußeren Oberfläche der Membran verschieden von der an der inneren Oberfläche ist.

2. Hohlfaser-Filtrationsmembran auf Polyacrylnitrilbasis nach Anspruch 1, wobei die zur Oberfläche der Membran offenen Poren eine durchschnittliche Porengröße von nicht mehr als 1 µm haben und die durchschnittliche Porengröße auf mindestens einer der Oberflächen nicht weniger als 0,01 µm beträgt.

3. Hohlfaser-Filtrationsmembran auf Polyacrylnitrilbasis nach Anspruch 1 oder 2, wobei die durchschnittliche Porengröße an der inneren Oberfläche der Membran größer als die an der äußeren Oberfläche ist.

**4.** Hohlfaser-Filtrationsmembran auf Polyacrylnitrilbasis nach einem der Ansprüche 1 bis 3, wobei die Membran ein Polymer auf Acrylnitrilbasis mit einer Grenzviskositätszahl von nicht weniger als 0,4 bis weniger als 2,0 enthält.

**5.** Hohlfaser-Filtrationsmembran auf Polyacrylnitrilbasis, wobei die Membran prozentuale Änderungen der Reißfestigkeit und der Reißdehnung von weniger als 20 % vor und nach dem Eintauchen in eine wäßrige Hypochloritlösung, die einen Alkali(en)-Gehalt von 0,1 n (normal) hat und eine verfügbare Chlorkonzentration von 1200 ppm besitzt, bei einer Lösungstemperatur von 25°C während 120 Stunden aufweist.

**6.** Verfahren zur Herstellung einer Hohlfaser-Filtrationsmembran auf Polyacrylnitrilbasis, welches umfaßt:

Auspressen einer membranbildenden Lösung, die ein Polymer auf Acrylnitrilbasis, ein Lösungsmittelgemisch aus Propylencarbonat und Dimethylsulfoxid und einen Zusatzstoff enthält, durch eine Koaxialröhren-Spinndüse zusammen mit einer Bohrungslösung, die befähigt ist, die Phasentrennung der membranbildenden Lösung einzuleiten und eine Viskosität von nicht weniger als 15 cP (Centipoise) bei 20°C hat,
Leiten beider Lösungen durch einen Luftspalt und
darauffolgendes Koagulieren der membranbildenden Lösung in einem Koagulationsbad.

**7.** Verfahren nach Anspruch 6, wobei die Konzentration des Propylencarbonats in dem Lösungsmittelgemisch nicht weniger als 2 Gew.-% bis nicht mehr als 99,9 Gew.-% beträgt.

**8.** Verfahren nach Anspruch 6 oder 7, wobei der Zusatzstoff Polyethylenglycol mit einem Molekulargewicht von nicht mehr als 1000 ist.

**9.** Verfahren nach einem der Ansprüche 6 bis 8, wobei die Bohrungslösung eine Lösung ist, die ein Glycol oder Glycerin mit einem Molekulargewicht von nicht mehr als 1000 enthält.

**Revendications**

**1.** Membrane de filtration en fibres tubulaires à base de polyacrylonitrile, dans laquelle la membrane comprend une structure en éponge exempte de sites de défaut de polymère de dimensions supérieures à 10 μm au sein de la membrane, les dimensions de pore de la membrane diminuant continuellement vers les deux surfaces de la membrane et la dimension de pore sur la surface extérieure de la membrane étant différente de celle sur la surface intérieure.

**2.** Membrane de filtration en fibres tubulaires à base de polyacrylonitrile suivant la revendication 1, dans laquelle les pores débouchant à la surface de la membrane ont une dimension moyenne de pore qui n'est pas supérieure à 1 μm et la dimension moyenne de pore sur au moins l'une des surfaces n'est pas inférieure à 0,01 μm.

**3.** Membrane de filtration en fibres tubulaires à base de polyacrylonitrile suivant la revendication 1 ou 2, dans laquelle la dimension moyenne de pore sur la surface intérieure de la membrane est plus grande que sur la surface extérieure.

**4.** Membrane de filtration en fibres tubulaires à base de polyacrylonitrile suivant l'une des revendications 1 à 3, dans laquelle la membrane comprend un polymère à base d'acrylonitrile d'une viscosité intrinsèque qui n'est pas inférieure à une valeur allant de moins de 0,4 à moins de 2,0.

**5.** Membrane de filtration en fibres tubulaires à base de polyacrylonitrile, dans laquelle la membrane présente des variations en pourcentage inférieures à 20 % de résistance à la rupture et d'allongement à la rupture avant et après avoir été trempée dans une solution aqueuse hypochlorite contenant 0,1 N (normal) d'un agent alcalin ou d'agents alcalins et ayant une concentration disponible en chlore de 1200 ppm à une température de la solution de 25°C pendant 120 heures.

**6.** Procédé de production d'une membrane de filtration en fibres tubulaires à base de polyacrylonitrile, dans lequel :

on déverse une solution membranogène comprenant un polymère à base d'acrylonitrile, un mélange de solvant constitué de carbonate de propylène et de diméthyl sulfoxyde et un additif dans une filière à tube coaxial ensemble avec une solution de bore qui est susceptible d'induire une séparation de phase de la solution membranogène et qui a une viscosité qui n'est pas inférieure à 15 cm (centipoises) à 20°C ;
on fait passer les deux solutions dans un intervalle d'air ; et
puis on coagule la solution membranogène dans un bain de coagulation.

7.  Procédé suivant la revendication 6, dans lequel la concentration du carbonate de propylène dans le mélange de solvant est comprise entre une valeur qui n'est pas inférieure à 2 % en poids et qui n'est pas supérieure à 99,9 % en poids.

8.  Procédé suivant la revendication 6 ou 7, dans lequel l'additif est du polyéthylène glycol d'une masse moléculaire qui n'est pas supérieure à 1000.

9.  Procédé suivant l'une quelconque des revendications 6 à 8, dans lequel la solution de bore est une solution contenant un glycol ou un glycérol ayant une masse moléculaire qui n'est pas supérieure à 1000.

FIG.1

450709    7KV    X400    75um

FIG.2

450706    7KV    X3.00K    10.0um

FIG.3

450703   7KV   X3.00K   10.0um

FIG.4

440202   7KV   X10.0K   3.0um

# FIG.5

# FIG.6

INNER SURFACE
OF VESSEL

OUTER SURFACE
OF MEMBRANE IN
HOLLOW FIBER STATE